# EUROPEAN PATENT APPLICATION

(11) **EP 4 120 034 A1**
(43) Date of publication of application: **18.01.2023**
(21) Application number: 20924716.2
(22) Date of filing: 16.12.2020
(51) Int. Cl.: G05B 19/05

(54) **SUPPORT DEVICE, SUPPORT PROGRAM, AND SUPPORT METHOD**

(30) Priority: 12.03.2020 JP 2020043238
(71) Applicant: OMRON Corporation, Kyoto-shi, Kyoto 600-8530 (JP)
(72) Inventor: FUJIMURA, Ryosuke, Kyoto-shi, Kyoto 600-8530 (JP); SUGANUMA, Hiromu, Kyoto-shi, Kyoto 600-8530 (JP); KAWAHARADA, Akio, Kyoto-shi, Kyoto 600-8530 (JP); MATSUI, Asahi, Kyoto-shi, Kyoto 600-8530 (JP)
(74) Representative: Mewburn Ellis LLP
(86) International application number: PCT/JP2020/047035
(87) International publication number: WO 2021/181796

(57) **Abstract**

A support device accepts selection of a target program to be copied from a control program, and sets a copy program in the control program, the copy program being obtained by copying the target program. The support device generates a list of variable names extracted from the target program. The support device rewrites a variable name in the copy program based on the edited list obtained by editing the list. As a result, even when it is desired to arbitrarily change the variable name, time and effort of a user to carry out input work is reduced.

## Description

### TECHNICAL FIELD

The present disclosure relates to a support device, a support program, and a support method.

### BACKGROUND ART

Conventionally, a support device that supports creating and editing a program of a programmable controller is known. For example, Japanese Patent Laying-Open No. 4-286002 (PTL 1) discloses a programming device for setting a sequence program executed on a programmable controller in the programmable controller. This programming device automatically creates a sequence program including repetition of a basic unit, based on a program as the basic unit and external input data including an initial value, a repetition rule, and a repetition number corresponding to each variable name in the program.

### CITATION LIST

### PATENT LITERATURE

PTL 1: Japanese Patent Laying-Open No. 4-286002

### SUMMARY OF INVENTION

### TECHNICAL PROBLEM

According to the programming device disclosed in PTL 1, the variable name of the basic unit to be repeated is automatically rewritten according to the repetition rule that has been input in advance. However, in a case where it is desired to arbitrarily change the variable name in the basic unit that is repeated, the technique of PTL 1 cannot be applied. Therefore, it takes time and effort to carry out input work to change the variable name.

The present disclosure has been made in view of the above problem, and an object of the present disclosure is to provide a support device, a support program, and a support method capable of reducing time and effort of a user to carry out input work even when it is desired to arbitrarily change the variable name.

### SOLUTION TO PROBLEM

According to one example of the present disclosure, a support device that supports development of a control program executed in a control device configured to control a control target includes: an acceptance unit; an extraction unit; a generation unit; and a copy processing unit. The acceptance unit accepts selection of a target program to be copied from the control program. The extraction unit extracts a variable name from the target program. The generation unit generates a list of the extracted variable name. The copy processing unit sets a copy program in the control program, the copy program being obtained by copying the target program. The copy processing unit rewrites a variable name in the copy program based on an edited list obtained by editing the list.

According to this disclosure, a user is able to arbitrarily and easily change the variable name in the copy program by changing the variable name included in the list. As a result, even when it is desired to arbitrarily change the variable name of the copy program, it is possible to reduce time and effort of the user to carry out input work.

In the above disclosure, the generation unit exports a setting file including the list and having a specified file format. The copy processing unit rewrites the variable name in the copy program by importing an edited file including the edited list generated by editing the setting file using an application that is able to edit a file having the specified file format.

According to this disclosure, the user is able to easily change the variable name in the list included in the setting file using various functions of the application.

In the above disclosure, the generation unit causes a first error detection code corresponding to the target program to be included in the setting file. The copy processing unit permits the edited file to be imported when the first error detection code matches a second error detection code included in the edited file, and fails to permit the edited file to be imported when there is a difference between the first error detection code and the second error detection code.

According to this disclosure, when a file different from the edited file obtained by editing the setting file is erroneously specified, it is possible to prevent continuation of processing using this file.

In the above disclosure, the generation unit displays the list on a user interface. The support device further includes: an editing unit configured to edit the list according to an input to the user interface to generate the edited list.

According to this disclosure, the user is able to edit the list without using the application.

In the above disclosure, the extraction unit further extracts a comment for each variable from the target program. The generation unit causes the extracted comment to be included in the list. The copy processing unit rewrites a comment for each variable in the copy program based on the edited list.

According to this disclosure, the user is able to arbitrarily and easily change the comment for each variable in the copy program by changing the comment included in the above list.

In the above disclosure, the extraction unit further extracts a comment for each unit program constituting the target program from the target program. The generation unit causes the extracted comment to be included in the list. The copy processing unit rewrites a comment for each unit program in the copy program based on the edited list.

According to this disclosure, the user is able to arbitrarily and easily change the comment for each unit program constituting the copy program by changing the comment included in the above list.

In the above disclosure, the specified file format is a CSV format. According to this disclosure, the user is able to easily edit the setting file using a general-purpose application such as Microsoft Excel (registered trademark).

According to one example of the present disclosure, a support program is executed by a computer communicable with a control device configured to control a control target, and supports development of a control program executed by the control device. The support program causes the computer to execute the first to fourth steps. The first step is a step of accepting selection of a target program to be copied from the control program. The second step is a step of extracting a variable name from the target program. The third step is a step of generating a list of the extracted variable name. The fourth step is a step of setting a copy program in the control program, the copy program being obtained by copying the target program. The fourth step includes a step of rewriting a variable name in the copy program based on an edited list obtained by editing the list.

According to one example of the present disclosure, a support method in a support device that supports development of a control program executed in a control device configured to control a control target includes the first to fourth steps described above.

### ADVANTAGEOUS EFFECTS OF INVENTION

According to the present disclosure, even when it is desired to arbitrarily change a variable name, it is possible to reduce time and effort of a user to carry out input work.

### BRIEF DESCRIPTION OF DRAWINGS

Fig. 1 is a view schematically illustrating an application scene of a support device 200 according to the present embodiment.
Fig. 2 is a schematic diagram illustrating a configuration example of a control system 1.
Fig. 3 is a schematic diagram illustrating a hardware configuration example of a PLC 100.
Fig. 4 is a schematic diagram illustrating a hardware configuration example of support device 200.
Fig. 5 is a diagram illustrating an example of a display screen 30 including a control program 400 that is being created.
Fig. 6 is a diagram illustrating an example of a setting screen 40 for setting a condition of copy processing.
Fig. 7 is a diagram illustrating an example of a dialog box 55 for prompting specification of a file format and a file path of a setting file 300.
Fig. 8 is a diagram illustrating an example of a target program 420.
Fig. 9 is a diagram illustrating an example of setting file 300 corresponding to target program 420 illustrated in Fig. 8.
Fig. 10 is a diagram illustrating an example of an edited file 302 obtained by editing setting file 300 illustrated in Fig. 9.
Fig. 11 is a diagram illustrating an example of a dialog box 60 for prompting specification of a file path of edited file 302.
Fig. 12 is a diagram illustrating a copy program 422 that has been rewritten according to edited file 302 illustrated in Fig. 11.
Fig. 13 is a flowchart illustrating an example of a flow of a process of support device 200 when setting file 300 is exported.
Fig. 14 is a flowchart illustrating an example of a flow of a process of support device 200 when edited file 302 is imported.
Fig. 15 is a diagram illustrating an example of a setting screen 40A according to a modified example.

### DESCRIPTION OF EMBODIMENTS

An embodiment of the present invention will be described in detail with reference to the drawings. The same or corresponding parts in the drawings are denoted by the same reference numerals, and the descriptions thereof will not be repeated. The embodiment and modified example described below may be selectively combined as appropriate.

### §1 Application example

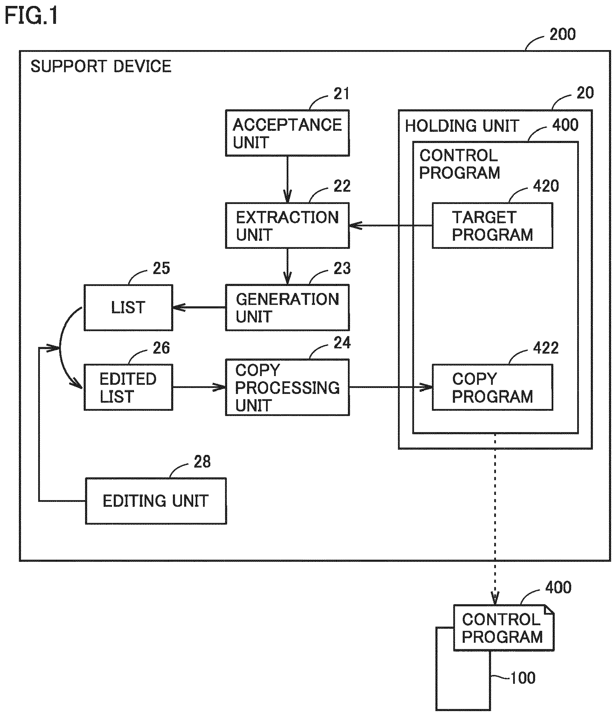

With reference to Fig. 1, an example of a scene to which the present invention is applied will be described. Fig. 1 is a view schematically illustrating an application scene of a support device 200 according to the present embodiment.

Support device 200 is a device that provides a development support environment for a control program 400. Support device 200 has an editor function for creating and editing control program 400 as a function for supporting development of control program 400. Note that the edit function may include an online edit function and an offline edit function.

The same program can be set in a plurality of locations of control program 400. In such a case, if the same program is created at each of the plurality of locations, time and effort of a user (designer) required to create control program 400 increases. Therefore, support device 200 according to the present embodiment has a function of setting, in control program 400, a copy program 422 obtained by copying a target program 420 to be copied in control program 400. As a result, time and effort of the user required for creating control program 400 is reduced.

Support device 200 illustrated in Fig. 1 includes a holding unit 20, an acceptance unit 21, an extraction unit 22, a generation unit 23, and a copy processing unit 24 as components for providing the development support environment for control program 400.

Support device 200 further includes an editing unit 28. Editing unit 28 may be implemented in support device 200 as a configuration for providing the development support environment of control program 400, or may be implemented in support device 200 as a configuration different from the configuration for providing the development support environment.

Holding unit 20 holds control program 400 created or edited by the user. Typically, holding unit 20 is a function implemented by a hard disk that stores various programs executed by support device 200 in a nonvolatile manner. Control program 400 is executed by a programmable logic controller (PLC) 100 which is an example of a control device for controlling a control target.

Acceptance unit 21 accepts a user operation. For example, acceptance unit 21 is an input interface that accepts an input signal from a mouse or a keyboard. Acceptance unit 21 accepts selection of target program 420 to be copied from control program 400 that is being created.

Extraction unit 22 extracts a variable name from target program 420 selected as a copy target. That is, extraction unit 22 extracts a variable name for each of one or more variables used in target program 420. Generation unit 23 generates a list 25 of the extracted variable name.

Editing unit 28 edits list 25 and generates an edited list 26 according to a user's instruction. Specifically, the user changes the variable name included in list 25 to a desired name.

Copy processing unit 24 sets copy program 422 obtained by copying target program 420 in control program 400.

Copy processing unit 24 rewrites the variable name in copy program 422 based on edited list 26. That is, copy processing unit 24 reflects the variable name included in edited list 26 in copy program 422.

Copy processing unit 24 may set copy program 422 in control program 400 by the number of times of copying specified by the user. In this case, list 25 and edited list 26 are generated for each copy program 422.

As described above, support device 200 reflects the variable name included in edited list 25 obtained by editing list 26 in copy program 422. Therefore, the user can arbitrarily and easily change the variable name in copy program 422 by changing the variable name included in list 25. That is, according to support device 200 of the present embodiment, even when it is desired to arbitrarily change the variable name, it is possible to reduce time and effort of a user to carry out input work.

### §2. Specific examples

### <A. System configuration>

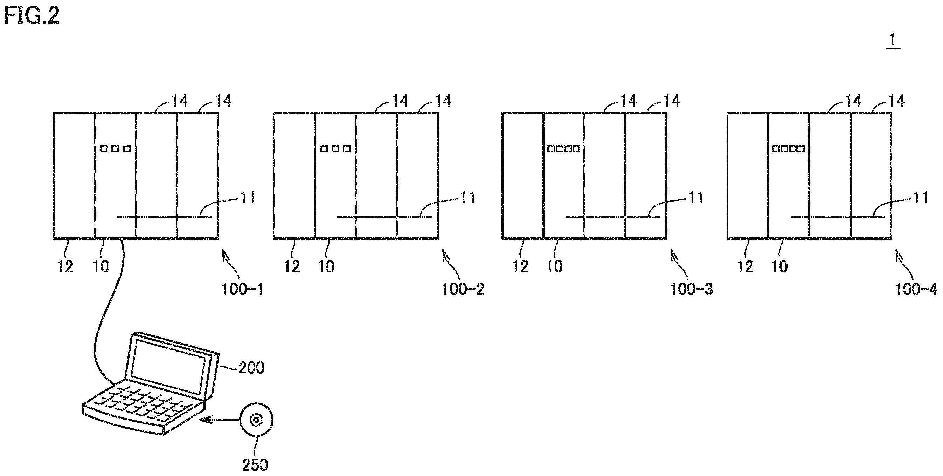

A control system 1 including support device 200 according to the present embodiment will be described with reference to Fig. 2. Fig. 2 is a schematic diagram illustrating a configuration example of control system 1.

Control system 1 illustrated in Fig. 2 includes a plurality of PLCs 100-1, 100-2, 100-3, 100-4, ... (hereinafter, also collectively referred to as "PLC 100"), and support device 200.

Each of PLCs 100 is an example of a control device that controls a control target that is a field device such as a relay or a sensor. Control system 1 may include one PLC 100. Hereinafter, in order to simplify the description of control system 1, a development support environment for one PLC 100 is described.

PLC 100 typically includes a central processing unit (CPU) unit 10 that is a main body executing various programs including control program 400 (see Fig. 1), a power supply unit 12 that supplies power to CPU unit 10 and the like, and an input/output (I/O) unit 14 that exchanges signals from fields. I/O unit 14 is connected to CPU unit 10 via a system bus 11.

Support device 200 is connectable to PLC 100, and provides the development support environment for control program 400 executed by PLC 100. Such a development support environment is provided by installing a support program in support device 200.

The user (designer) can design control program 400 for PLC 100 using the support program, and install control program 400 that has been designed in PLC 100.

The support program is distributed in a form of a program stored in a recording medium 250, for example, and installed in support device 200. The support program may also be installed from an external server device or the like via a network, instead of recording medium 250. As one example, support device 200 is connected to CPU unit 10 of PLC 100 through a connection cable. Support device 200 is typically implemented by a personal computer.

The development support environment provided by support device 200 may have an editor (editing), a debug, and a simulator of a program, and a display function for outputting output information thereof to a monitor such as a display, and the like. Support device 200 may further have a function of acquiring a state value of PLC 100 in operation and outputting the state value to a monitor such as a display.

Control program 400 to be developed conforms to the international standard IEC 61131-3, for example. The international standard IEC 61131-3 specifies five types of programming languages: a ladder diagram (LD), a function block diagram (FBD), a sequential function chart (SFC), an instruction list (IL), and a structured text (ST). The control program according to the present embodiment may be described in any programming language conforming to the international standard IEC 61131-3. In particular, the ladder diagram, the function block diagram, and the sequential function chart are program languages which require description and arrangement of figures, and it takes time and effort to describe a program and set a variable name. As described above, according to support device 200 of the present embodiment, the variable name can easily be changed. Therefore, support device 200 according to the present embodiment is effective for development of control program 400 described in any program language of the ladder diagram, the function block diagram, and the sequential function chart.

Support device 200 can display the contents of control program 400. Specifically, support device 200 can display a source code of control program 400. For example, support device 200 displays the contents of control program 400 during editing and updating work of control program 400.

### <B. Hardware configuration of PLC 100>

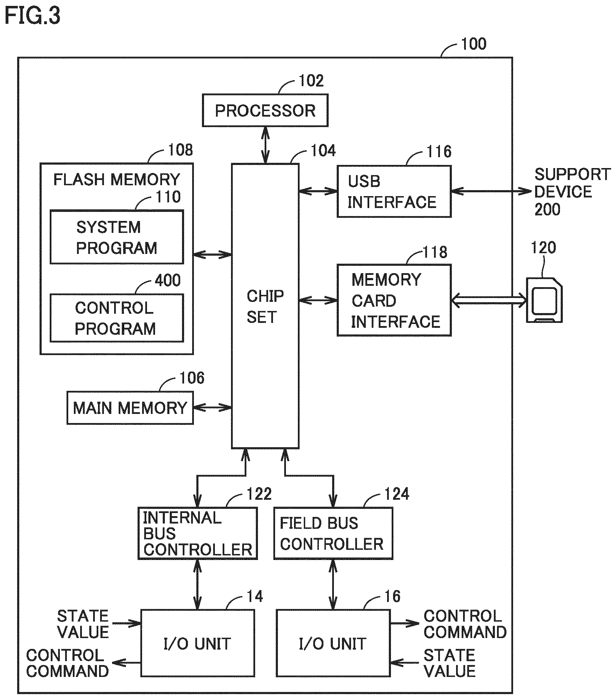

Fig. 3 is a schematic diagram illustrating a hardware configuration example of PLC 100. Referring to Fig. 3, PLC 100 realizes control on a control target by a processor executing a program installed in advance. More specifically, PLC 100 includes a processor 102 such as a CPU or a micro-processing unit (MPU), a chip set 104, a main memory 106, a flash memory 108, a universal serial bus (USB) interface 116, a memory card interface 118, an internal bus controller 122, and a field bus controller 124. Flash memory 108 stores a system program 110 and control program 400.

Processor 102 realizes control on the control target by reading system program 110 and control program 400 stored in flash memory 108, developing the system program and the control program in main memory 106, and executing the system program and the control program.

System program 110 includes instruction codes for providing basic functions of PLC 100, such as data input/output processing and execution timing control. Control program 400 is created according to a control purpose (for example, a line or a process of a target) of the user.

Control program 400 is, for example, a sequence program for executing sequence control and a motion program for executing motion control. Control program 400 is not limited to these programs, and may be any program that can be installed in PLC 100 and is created or edited by the user.

Chip set 104 realizes processing of PLC 100 as a whole by controlling each component.

Internal bus controller 122 is an interface that exchanges data between PLC 100 and I/O unit 14 connected through an internal bus. Field bus controller 124 is an interface that exchanges data between PLC 100 and an I/O unit 16 connected through a field bus (not illustrated). Internal bus controller 122 and field bus controller 124 acquire state values input to I/O unit 14 and I/O unit 16, respectively, and output calculation results by processor 102 as command values from I/O unit 14 and I/O unit 16, respectively.

USB interface 116 controls data exchange by USB. Support device 200 communicates with PLC 100 via USB interface 116. Memory card interface 118 is configured such that memory card 120 is detachable, and can write data to memory card 120 and read data from memory card 120.

Control program 400 created or edited by the user can be installed from support device 200, memory card 120, a distribution server, or the like.

Although Fig. 3 illustrates the configuration example in which necessary functions are provided by processor 102 executing the program, some or all of these provided functions may be implemented using a dedicated hardware circuit (for example, an application specific integrated circuit (ASIC), a field-programmable gate array (FPGA), or the like). Alternatively, a main part of PLC 100 may be realized by using hardware according to a general-purpose architecture (for example, an industrial personal computer based on a general-purpose personal computer). In this case, a plurality of operating systems (OSs) having different uses may be executed in parallel using a virtualization technology, and necessary applications may be executed on respective OSs.

### <C. Hardware configuration of support device 200>

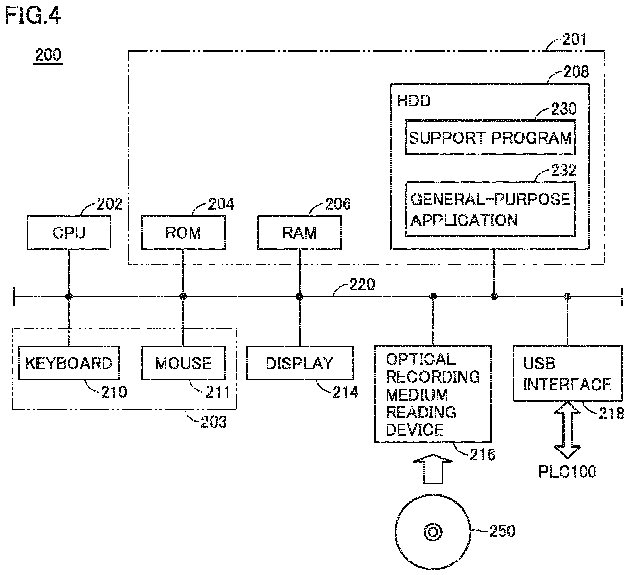

Fig. 4 is a schematic diagram illustrating a hardware configuration example of support device 200. Referring to Fig. 4, support device 200 is typically configured by a general-purpose computer. From the viewpoint of maintainability at a manufacturing site where PLC 100 is disposed, a highly portable notebook-type personal computer is preferable.

Support device 200 includes a storage unit 201 and a CPU 202 that executes various programs including the OS. Storage unit 201 includes a read only memory (ROM) 204 that stores BIOS and various data, a random access memory (RAM) 206 that provides a work area for storing data necessary for executing a program by CPU 202, and a hard disk (HDD) 208 that stores a program executed by CPU 202 in a nonvolatile manner. These components are connected via a bus 220.

HDD 208 stores a support program 230 for providing the development support environment for a control program and a general-purpose application 232. general-purpose application 232 is, for example, Microsoft Excel (registered trademark). Acceptance unit 21, extraction unit 22, generation unit 23, and copy processing unit 24 illustrated in Fig. 1 are implemented by CPU 202 executing support program 230. Editing unit 28 illustrated in Fig. 1 is realized by CPU 202 executing general-purpose application 232.

Support device 200 further includes an operation unit 203 including a keyboard 210 and a mouse 211 operated by the user to input instructions to support device 200, and a display 214 configured to present information to the user. Operation unit 203 and display 214 constitute a user interface.

Support device 200 includes an optical recording medium reading device 216 for reading support program 230 and general-purpose application 232 from recording medium 250. Support program 230 and general-purpose application 232 may be installed from a memory card, a distribution server, or the like.

A USB interface 218 controls data exchange by USB. Support device 200 communicates with PLC 100 via USB interface 218. The communication between support device 200 and PLC 100 is not limited to the USB but may be Ethernet (registered trademark) or the like.

Fig. 4 illustrates the configuration example in which necessary functions are provided by a processor such as CPU 202 executing the program. However, some or all of these provided functions may be implemented using a dedicated hardware circuit (for example, ASIC or FPGA). In this case, a plurality of OSs having different uses may be executed in parallel using a virtualization technology, and necessary applications may be executed on respective OSs.

### <D. Method of copy processing of target program>

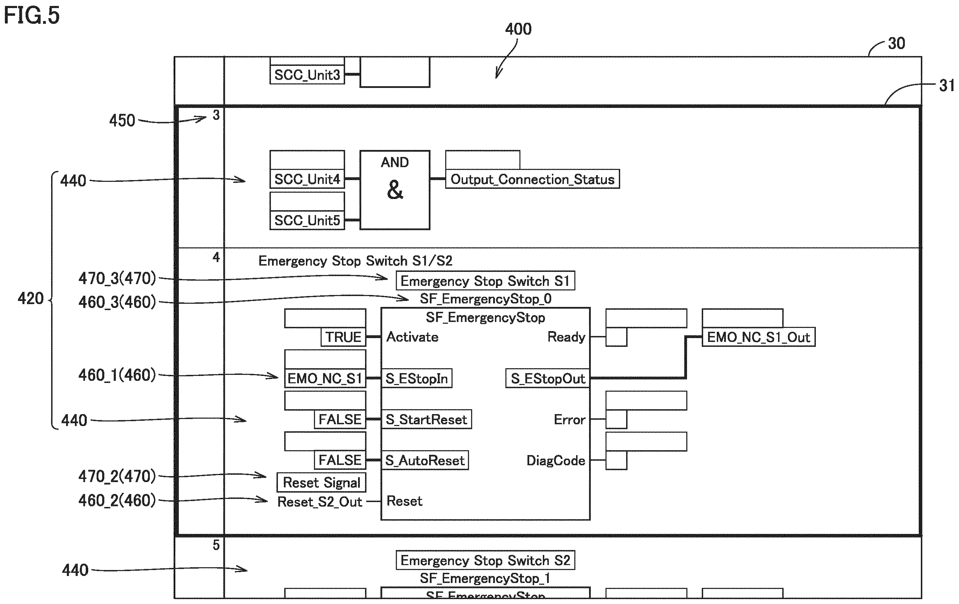

A method of copy processing of target program 420 in support device 200 will be described with reference to Figs. 5 to 12. The copy processing of target program 420 is executed by CPU 202 according to an input to operation unit 203 and support program 230.

CPU 202 creates control program 400 according to an input to operation unit 203. CPU 202 causes display 214 to display control program 400 that is being created.

Fig. 5 is a diagram illustrating an example of a display screen 30 including control program 400 that is being created. Display screen 30 illustrated in Fig. 5 is displayed on display 214.

Control program 400 described in the function block diagram is displayed on display screen 30. Control program 400 includes a unit program 440 for each line. Line numbers 450 are assigned to respective lines. The user can input a comment (hereinafter, it is referred to as a "line comment") for each unit program 440. CPU 202 sets the input line comment in control program 400 in association with unit program 440. Generally, the line comment is input so as to represent the content of corresponding unit program 440.

The user can set a variable name 460 and a comment (hereinafter, referred to as a "variable comment 470") for each variable used in each unit program 440. In Fig. 5, reference signs "460" and "470" are assigned only to a part of variables for simplification. Identical variable name 460 and identical variable comment 470 are set to the same variable. Variable comment 470 may not be set for all variables.

That is, the user can input variable comment 470 only for a desired variable. Generally, variable comment 470 is input so as to represent a type, content, and the like of the variable. On display screen 30 illustrated in Fig. 5, variable comment 470 is not set for the variable corresponding to a variable name 460_1. On the other hand, variable comments 470_2, 470_3 are respectively set for the variables corresponding to variable names 460_2, 460_3.

CPU 202 operating as acceptance unit 21 accepts selection of target program 420 to be copied from control program 400 on display screen 30. Target program 420 includes one or more unit programs 440.

Display screen 30 includes a frame line 31 indicating a copy target range. The user can change the copy target range by changing the size of frame line 31. CPU 202 selects a program including one or more unit programs 440 in frame line 31 as target program 420 in response to a copy instruction being input to operation unit 203. On display screen 30 illustrated in Fig. 5, a program including two unit programs 440 corresponding to line numbers 450 indicating "3" and "4" is selected as target program 420.

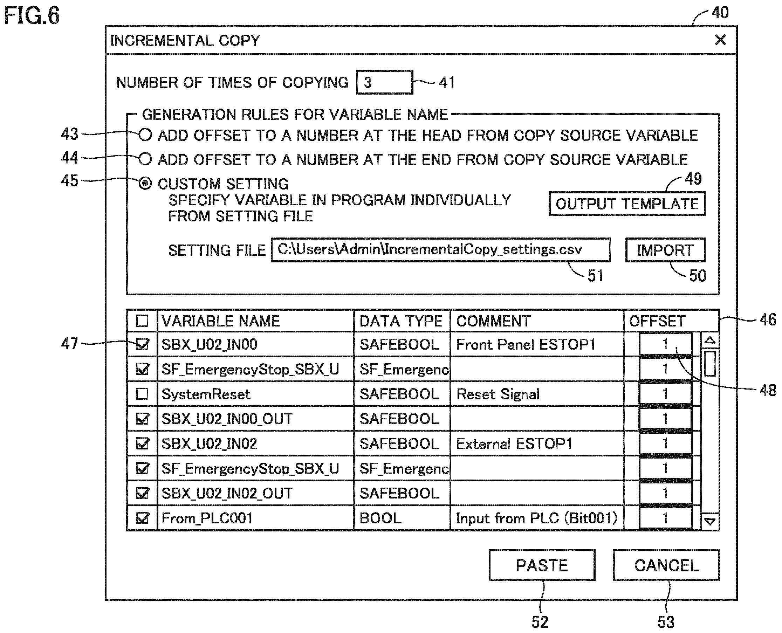

Fig. 6 is a diagram illustrating the example of a setting screen 40 for setting a condition of copy processing. Setting screen 40 includes an input field 41 for inputting the number of times of copying of target program 420. The user may input a required number of copy programs 422 obtained by copying target program 420 in input field 41.

CPU 202 operating as copy processing unit 24 (see Fig. 1) copies target program 420 by the number of times of copying, and thus generates copy programs 422 as many as the number of times of copying. At this time, the variable name, the variable comment, and the line comment in copy program 422 are the same as variable name 460, variable comment 470, and the line comment in target program 420, respectively.

CPU 202 rewrites the variable name in copy program 422 according to any one of the first to third methods.

The first method is rewriting the variable name in copy program 422 to a name obtained by adding an offset to a number at a head in numbers included in variable name 460 in target program 420. For example, when variable name 460 in target program 420 is "SBX_U02_IN00", the variable name in copy program 422 is rewritten to "SBX_U03_IN00" obtained by adding an offset "1" to the numerical value "02" at the head.

When an integer of 2 or more is input in input field 41, two or more copy programs 422 are set in control program 400. In this case, the variable name in the k-th copy program 422 is rewritten to a variable name obtained by adding the offset by k times to the number at the head of variable name 460 in target program 420.

The second method is rewriting the variable name in copy program 422 to a name obtained by adding an offset to a number at an end in numbers included in variable name 460 in target program 420. For example, when variable name 460 in target program 420 is "SBX_U02_IN00", the variable name in copy program 422 is rewritten to "SBX_U02_IN01" obtained by adding an offset "1" to the numerical value "00" at the end.

When an integer of 2 or more is input in input field 41, two or more copy programs 422 are set in control program 400. In this case, the variable name in the k-th copy program 422 is rewritten to a variable name obtained by adding the offset by k times to the number at the end of variable name 460 in target program 420.

The third method is arbitrarily rewriting a variable name in copy program 422. Details of the third method will be described later.

Setting screen 40 includes radio buttons 43 to 45 respectively corresponding to the first to third methods. When radio button 43 is selected, CPU 202 rewrites the variable name in copy program 422 according to the first method. When radio button 44 is selected, CPU 202 rewrites the variable name in copy program 422 according to the second method. When radio button 45 is selected, CPU 202 rewrites the variable name in copy program 422 according to the third method.

Setting screen 40 includes a variable list 46. Variable list 46 is a list in which a variable name, a data type, and a variable comment are associated with each variable used in target program 420. CPU 202 analyzes target program 420 to extract a variable name, a data type, and a variable comment for each variable. CPU 202 creates variable list 46 in which the extracted variable name, data type, and variable comment are associated with each other, and causes created variable list 46 to be included in setting screen 40. Variable list 46 further includes, for each variable, a checkbox 47 and an input field 48 for inputting an offset. Note that a default value "1" is input in input field 48.

Variable list 46 is used to set a condition of the copy processing according to the first method or the second method. Therefore, CPU 202 accepts an input to checkbox 47 and input field 48 of variable list 46 in response to selection of radio button 43 or radio button 44.

CPU 202 rewrites the variable name of copy program 422 according to the offset input to input field 48 only for the variable for which checkbox 47 is checked. Therefore, the user needs to check checkbox 47 only for the variable for which the variable name is desired to be set according to the offset. CPU 202 accepts the check of checkbox 47 only for the variable whose variable name includes a number.

In the first method and the second method, the variable name is rewritten so as to change the number by the offset. If the user desires to arbitrarily change the variable name, the user selects radio button 45 corresponding to the third method. Hereinafter, the third method will be described.

Setting screen 40 includes a button 49 for exporting setting file 300 including list 25 (see Fig. 1) and a button 50 for importing an edited file 302 including edited list 26 (see Fig. 1). Buttons 49, 50 relate to the third method. Therefore, CPU 202 accepts operations of buttons 49 and 50 in response to selection of radio button 45. Setting screen 40 further includes a display field 51 for displaying the file path of setting file 300. Note that nothing is described in display field 51 in the initial state.

In response to the operation of button 49, CPU 202 displays a dialog box for prompting specification of a file format and a file path of setting file 300 on display 214.

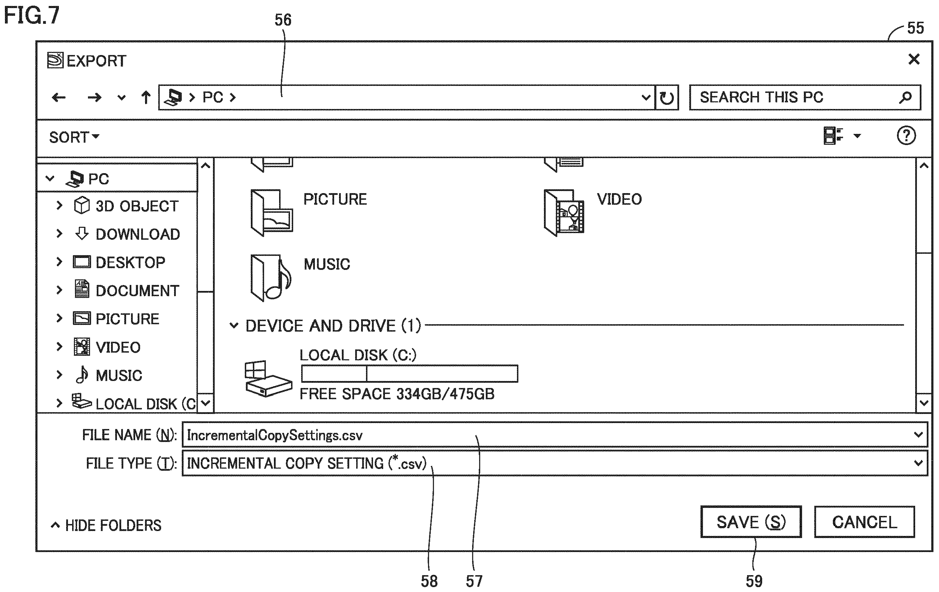

Fig. 7 is a diagram illustrating an example of a dialog box 55 for prompting specification of a file format and a file path of setting file 300. As illustrated in Fig. 7, dialog box 55 includes an input field 56 for specifying a directory of setting file 300, an input field 57 for specifying a file name, and an input field 58 for specifying a file format. Input field 58 is a field for selecting one file format from among predetermined one or more file formats. In the present embodiment, a file format that can be edited by general-purpose application 232 (for example, CSV format) is selected.

The user inputs a desired directory and a desired file name to input fields 56 and 57, respectively. Further, the user operates input field 58 to specify a file format. A file path corresponding to the input to input fields 56, 57, and 58 is reflected in display field 51 of Fig. 6.

Dialog box 55 includes a button 59 for instructing execution of the export of setting file 300. In response to the operation of button 59, CPU 202 operating as extraction unit 22 (see Fig. 1) extracts variable name 460 from target program 420. CPU 202 may further extract, from target program 420, at least one of variable comment 470 for each variable and a line comment for each unit program 440 constituting target program 420.

Next, CPU 202 operating as generation unit 23 (see Fig. 1) creates setting file 300 including list 25 of extracted variable names 460 and having the specified file name and file format. CPU 202 stores setting file 300 that has been created in the specified directory.

CPU 202 may cause variable comment 470 and line comment extracted from target program 420 to be included in setting file 300.

CPU 202 may cause the error detection code corresponding to target program 420 to be included in setting file 300. For example, CPU 202 calculates a cyclic redundancy check (CRC) of target program 420 and writes the CRC in setting file 300.

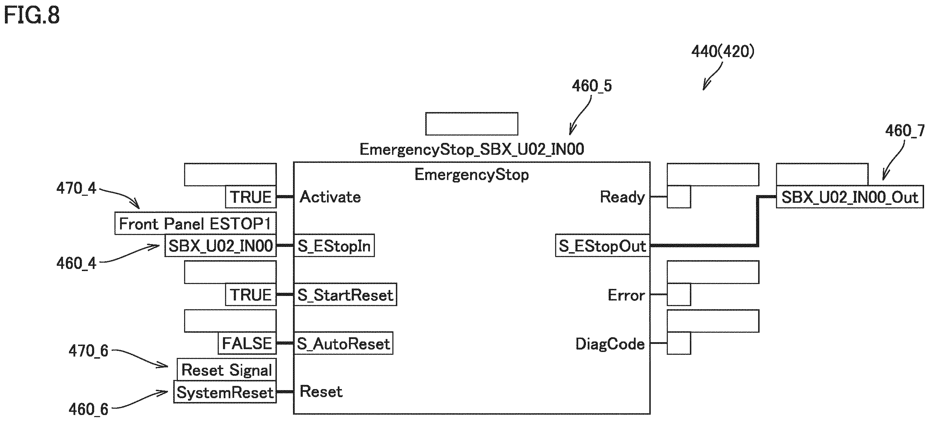

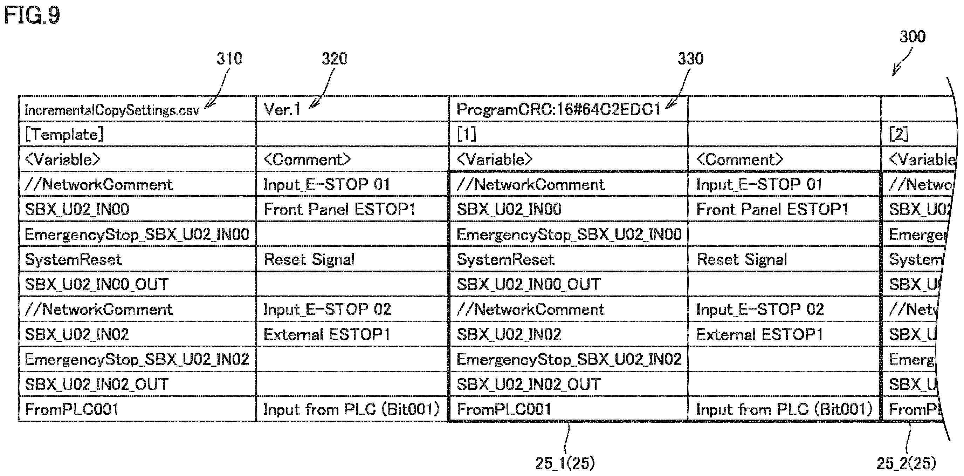

Fig. 8 is a diagram illustrating an example of target program 420. Fig. 8 illustrates only unit program 440 at the head of target program 420. Fig. 9 is a diagram illustrating an example of setting file 300 corresponding to target program 420 illustrated in Fig. 8.

CPU 202 extracts variable names 460_4 to 460_7 from target program 420 illustrated in Fig. 8. Further, when a variable comment is set, CPU 202 also extracts this variable comment. Specifically, CPU 202 extracts variable comments 470_4, 470_6 respectively set to variable names 460_4, 460_6. Further, CPU 202 also extracts line comments corresponding to respective unit programs 440 constituting target program 420.

Fig. 9 illustrates setting file 300 having CSV format. As illustrated in Fig. 9, a file name 310, a file version 320, and an error detection code 330 are described in the first line of setting file 300.

In the second line of setting file 300, a character string for identifying target program 420 and copy program 422 corresponding to the specified number of times of copying is described. In Fig. 9, [Template] identifies target program 420 to be copied. [k] (k is an integer from 1 to the number of times of copying) identifies k-th copy program 422. [Template] is described in an item (field) in the first column in the second line. [k] is described in the item in the (2k + 1)th column in the second line.

In the third line of setting file 300, titles of data of the fourth and subsequent lines are described. <Variable> indicates a variable name. <Comment> indicates a variable comment or a line comment. <Variable> is described in items in the first and (2k + 1)th columns of the third line. <Comment> is described in items in the second column and the (2k + 2)th column in the third line.

The extracted variable name, variable comment, and line comment are described in the fourth and subsequent lines of setting file 300. That is, items on and after the fourth line of setting file 300 correspond to list 25 of variable names, variable comments, and line comments extracted from target program 420. Fig. 9 illustrates list 25_1 generated for first copy program 422 and a part of list 25_2 generated for second copy program 422.

In the first column, variable names extracted from target program 420 are described in the order of appearance. In order to distinguish the variable name extracted from each unit program 440 constituting target program 420, "//NetworkComment" is described in a line immediately before the line in which the variable name extracted from each unit program 440 is described. In setting file 300 illustrated in Fig. 9, "//NetworkComment" is described in items in the fourth line and the ninth line in the first column. Therefore, four variable names extracted from unit program 440 at the head of target program 420, that is, variable names 460_4 to 460_7 illustrated in Fig. 8 are described in the items from the fifth line to the eighth line in the first column.

In the item in the second column, a line comment and a variable comment extracted from target program 420 are described. The line comment is described in an item next to an item in which "//NetworkComment" is described. For example, the line comment "Input_E-STOP 01" corresponding to unit program 440 illustrated in Fig. 8 is described in the item in the fourth line of the second column. The variable comment is described in the item next to the item in which the corresponding variable name is described. For example, variable comments 470_4, 470_6 illustrated in Fig. 8 are described in items next to the items in which variable names 460_4, 460_6 are described, that is, the items in the fifth line and the seventh line in the second column.

The character strings described in the items in the fourth and subsequent lines of the first column are copied to the items in the fourth and subsequent lines of the (2k + 1)th column. The character strings described in the items in the fourth and subsequent lines of the second column are copied to the items in the fourth and subsequent lines of the (2k + 2)th column.

Setting file 300 that has been exported has a file format that can be edited by general-purpose application 232. Therefore, the user can edit setting file 300 using general-purpose application 232. For example, the user edits the variable name, the variable comment, and the line comment described in the items of setting file 300 having the CSV format using general-purpose application 232 that is Microsoft Excel (registered trademark). At this time, the user can edit the variable name, the variable comment, and the line comment using various functions of general-purpose application 232. Alternatively, the user may overwrite one or more variable names and variable comments described in setting file 300 by using one or more variable names and variable comments described in a separately prepared variable list file. In this way, the user can easily change the variable name, the variable comment, and the line comment.

The user may move setting file 300 to an external information processing apparatus, and edit setting file 300 using a general-purpose application installed in this information processing apparatus.

In this way, the user creates edited file 302 including edited list 26 (see Fig. 1) by editing setting file 300. Edited file 302 may be created by overwriting setting file 300 or may be created separately from setting file 300.

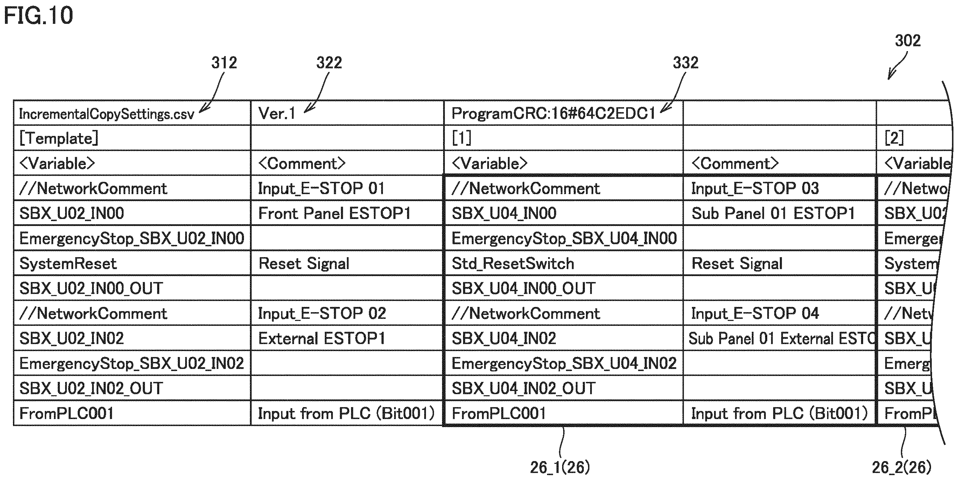

Fig. 10 is a diagram illustrating an example of edited file 302 obtained by editing setting file 300 illustrated in Fig. 9.

As illustrated in Fig. 10, a file name 312, a file version 322, and an error detection code 332 are described in the first line of edited file 302. Unless file name 310, file version 320, and error detection code 330 of setting file 300 are edited when edited file 302 is created, file name 312, file version 322, and error detection code 332 respectively coincide with file name 310, file version 320, and error detection code 330.

Edited file 302 illustrated in Fig. 10 is different from setting file 300 illustrated in Fig. 9 in the following points.
- the variable names described in the items (fields) in the third column, the 5-th to 8-th lines;
- the variable names described in the items in the third column, the 10-th to 12-th lines;
- the line comment described in the item of the fourth column, the fourth line;
- the variable comment described in the item of the fourth column, the fifth line;
- the line comment described in the item of the fourth column, the ninth line;
- The variable comment described in the item of the fourth column, the 10-th line.

The user may add, change, or delete a number, or may add, change, or delete a character string other than the number for the variable name, the variable comment, and the line comment. In this way, the user can arbitrarily change the variable name, the variable comment, and the line comment. Items on and after the fourth line of the (2k + 1)th and (2k + 2)th columns of edited file 302 correspond to edited list 26 of the variable name, the variable comment, and the line comment corresponding to k-th copy program 422. Fig. 10 illustrates edited list 26_1 generated for first copy program 422 and a part of edited list 26_2 generated for second copy program 422.

Upon creation of edited file 302, the user operates button 50 on setting screen 40 illustrated in Fig. 6. In response to the operation of button 50, CPU 202 operating as copy processing unit 24 (see Fig. 1) displays a dialog box prompting specification of the file path of edited file 302 on display 214.

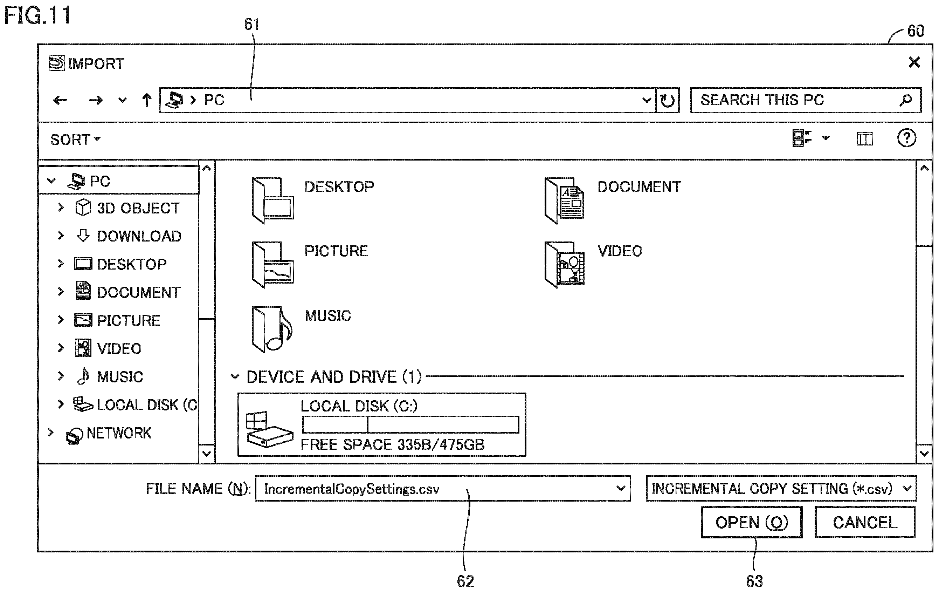

Fig. 11 is a diagram illustrating an example of a dialog box 60 for prompting specification of a file path of edited file 302. As illustrated in Fig. 11, dialog box 60 includes an input field 61 for specifying a directory of edited file 302 and an input field 62 for specifying a file name. In the initial state, a directory and a file name corresponding to the file path of setting file 300 are displayed in input fields 61 and 62. Therefore, in a case where edited file 302 is created by overwriting setting file 300, it is possible to save time and effort to input to input fields 61 and 62 by the user.

Dialog box 60 includes a button 63 for instructing execution of import of edited file 302. In response to the operation of button 63, CPU 202 imports edited file 302 and rewrites the variable name in copy program 422. When the variable comment and the line comment are described in edited file 302, CPU 202 further rewrites the variable comment and the line comment in copy program 422.

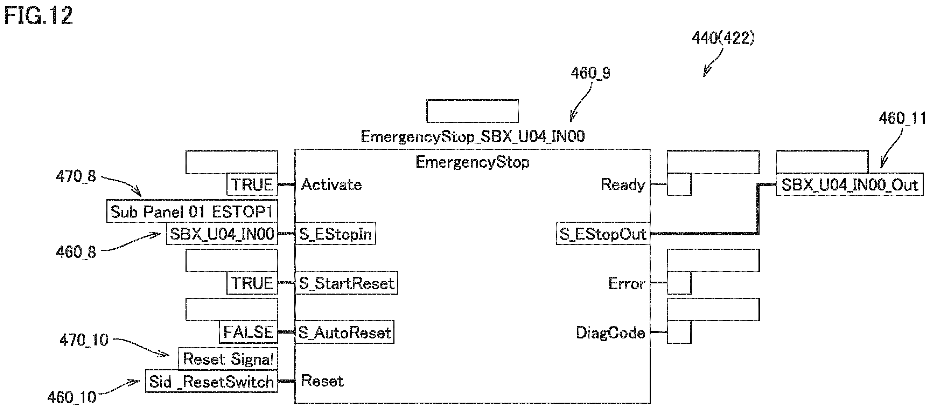

Fig. 12 is a diagram illustrating copy program 422 that has been rewritten according to edited file 302 illustrated in Fig. 11. Fig. 12 illustrates only unit program 440 at the head of the programs constituting copy program 422.

As illustrated in Fig. 12, variable names 460_8 to 460_11 in copy program 422 are changed from variable names 460_4 to 460_7 illustrated in Fig. 8. Further, a variable comment 470_8 in copy program 422 is changed from variable comment 470_4 illustrated in Fig. 8. The character strings of the items in the fourth column and the seventh line of edited file 302 illustrated in Fig. 11 match the character strings of the items in the fourth column and the seventh line of setting file 300 illustrated in Fig. 8. Therefore, a variable comment 470_10 in copy program 422 is the same as variable comment 470_6 illustrated in Fig. 8. Moreover, although not illustrated, the line comment corresponding to unit program 440 at the head of the programs constituting copy program 422 is changed from "Input_E-STOP 01" to "Input_E-STOP 03" according to edited file 302.

Returning to Fig. 6, setting screen 40 includes a button 52 for executing setting of copy program 422 in control program 400. In response to the operation of button 52, CPU 202 operating as copy processing unit 24 (see Fig. 1) sets (pastes) copy program 422 in control program 400.

Setting screen 40 includes a button 53 for canceling the copy processing. In response to the operation of button 53, CPU 202 stops the copy processing.

### <E. Flow of processing of support device>

Next, a flow of a process of support device 200 when setting file 300 is exported and a flow of a process of support device 200 when edited file 302 is imported will be described. These processes are executed when (i) target program 420 is selected on display screen 30 illustrated in Fig. 5, and (ii) the number of times of copying is input and radio button 45 is selected on setting screen 40 illustrated in Fig. 6. CPU 202 creates copy program 422 as many as the number of times of copying input in input field 41 of setting screen 40, and sets the copy program in control program 400.

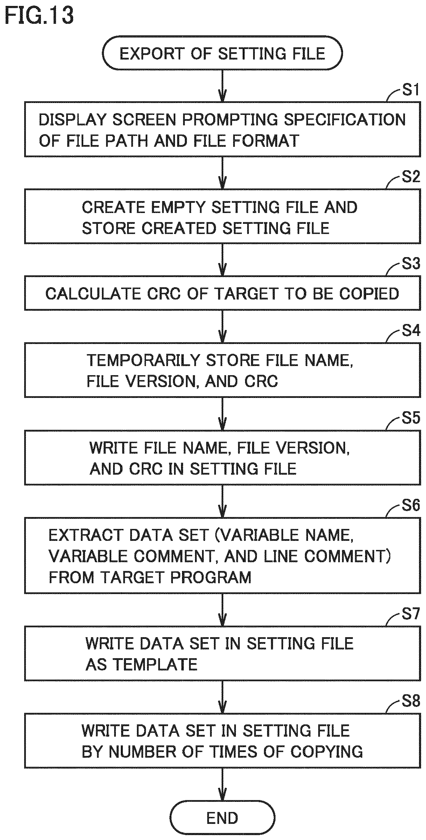

Fig. 13 is a flowchart illustrating an example of the flow of the process of support device 200 when setting file 300 is exported.

First, CPU 202 displays, on display 214, a screen (for example, dialog box 55 illustrated in Fig. 7) prompting specification of the file path and the file format of setting file 300 in response to the operation of button 49 on setting screen 40 (see Fig. 6) (step S1).

CPU 202 creates setting file 300 that is empty according to the specified file format, and stores setting file 300 that has been created in a location indicated by the specified file path (step S2). Hereinafter, a description will be given on the assumption that setting file 300 in CSV format is created.

CPU 202 calculates an error detection code (for example, CRC) of target program 420 to be copied (step S3).

CPU 202 temporarily stores the file name, the file version, and the CRC in RAM 206 (step S4). Further, CPU 202 writes the file name, the file version, and the CRC that has been stored in the first line of setting file 300 (step S5).

CPU 202 extracts the variable name, the variable comment, and the line comment from target program 420 (step S6).

CPU 202 writes a data set (data set indicating list 25) of the variable name, the variable comment, and the line comment that have been extracted in setting file 300 as a template (step S7). The data set as the template corresponds to the variable name, the variable comment, and the line comment of target program 420 to be copied.

Further, CPU 202 writes the data set in setting file 300 by the number of times of copying (step S8). The data set written by the number of times of copying corresponds to the variable name, the variable comment, and the line comment of copy program 422. After completion of step S8, CPU 202 ends the process of exporting setting file 300.

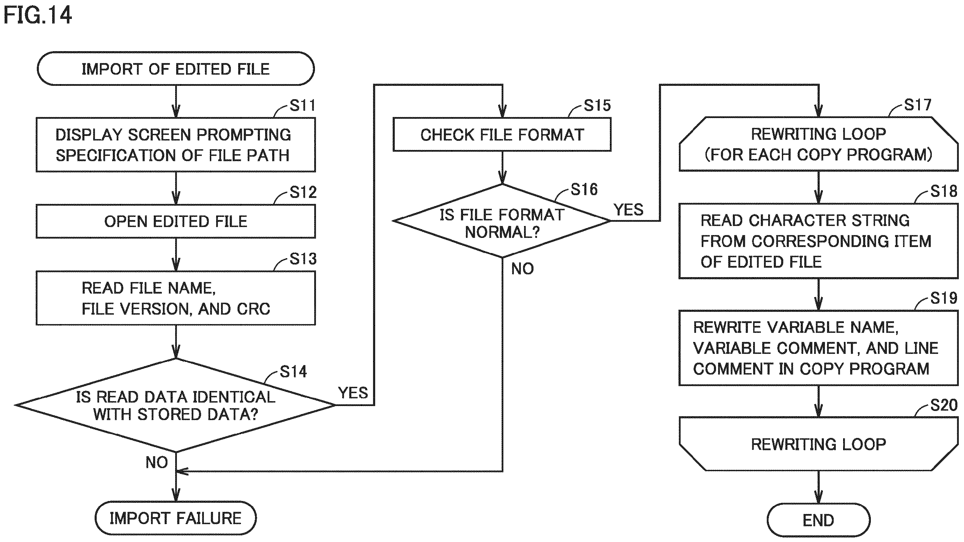

Fig. 14 is a flowchart illustrating an example of the flow of the process of support device 200 when edited file 302 is imported.

First, CPU 202 displays, on display 214, a screen (for example, dialog box 60 illustrated in Fig. 9) prompting specification of the file path of edited file 302 in response to the operation of button 50 on setting screen 40 (see Fig. 6) (step S11).

CPU 202 opens edited file 302 stored in the specified file path (step S12). Further, CPU 202 reads the file name, the file version, and the CRC from edited file 302 (step S13).

CPU 202 determines whether or not the file name, the file version, and the CRC that have been read match the file name, the file version, and the CRC (stored data) temporarily stored in RAM 206 in step S4 illustrated in Fig. 13 (step S14).

If YES in step S14, CPU 202 permits the import of edited file 302, and continues the processing from and after step S15. If NO in step S14, CPU 202 does not permit import of edited file 302. Specifically, CPU 202 displays the failure of the import on display 214, and ends the process of import. As a result, when a file different from the file name, the file version, and the CRC described in the first line of setting file 300 exported according to the flowchart illustrated in Fig. 13 is erroneously specified, it is possible to prevent continuation of processing using this file.

In step S15, CPU 202 checks the file format of edited file 302. For example, CPU 202 reads an item on the second line of edited file 302 illustrated in Fig. 9, that is, a character string for identifying target program 420 and copy program 422 corresponding to the number of times of copying ([Template], [k] (k is an integer from 1 to the number of times of copying)).

CPU 202 determines whether or not the file format is normal (step S16). Specifically, CPU 202 determines that the file format is normal when the character string described in the item of the first column in the second line of edited file 302 matches "Template" and a maximum value of the character string [k] described in the items on and after the third column in the second line matches the number of times of copying.

In the case of YES in step S16, CPU 202 permits the import of edited file 302, and repeats the rewriting loop of steps S17 to S20 for each copy program 422 corresponding to the number of times of copying.

In step S18, CPU 202 reads the character string of edited list 26 corresponding to k-th copy program 422 from edited file 302. Specifically, CPU 202 reads character strings described in items on and after the fourth line of the (2k + 1)th column and the (2k + 2)th column of edited file 302 illustrated in Fig. 10.

In step S19, CPU 202 rewrites the variable name, the variable comment, and the line comment in k-th copy program 422 according to the read character string.

Upon completion of the processing of steps S18 and S19 for each of k = 1 to the number of times of copying, CPU 202 ends the process of import of edited file 302.

If NO in step S16, CPU 202 does not permit import of edited file 302. Specifically, CPU 202 displays the failure of the import on display 214, and ends the process of import. Accordingly, even when a file having a different file format is specified, it is possible to prevent continuation of processing using this file.

### <F. Modified examples>

In the above specific example, setting file 300 including list 25 (see Fig. 1) and having the specified file format is exported. Then, edited file 302 including edited list 26 (see Fig. 1) generated by editing setting file 300 is imported. As a result, the user can edit setting file 300 using general-purpose application 232 different from support program 230, and create edited file 302. However, support program 230 may provide a function of editing list 25 to generate edited list 26. This eliminates the need for general-purpose application 232.

In this modified example, editing unit 28 is realized by CPU 202 executing support program 230.

CPU 202 operating as generation unit 23 generates list 25 of variable name 460 extracted from target program 420, and displays generated list 25 on display 214. CPU 202 operating as editing unit 28 edits list 25 according to the input to operation unit 203, and generates edited list 26. CPU 202 operating as copy processing unit 24 rewrites the variable name of copy program 422 based on edited list 26 that has been generated. CPU 202 may extract variable comment 470 and a line comment from target program 420, and cause variable comment 470 and the line comment that has been extracted to be included in list 25. In this case, CPU 202 rewrites the variable comment and the line comment of copy program 422 based on edited list 26.

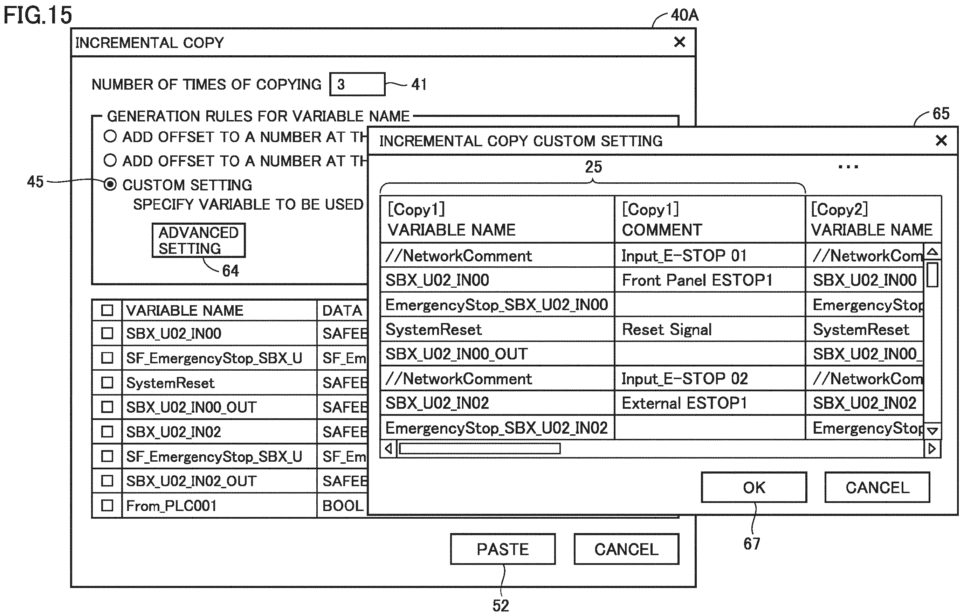

Fig. 15 is a diagram illustrating an example of a setting screen 40A according to a modified example. As illustrated in Fig. 15, setting screen 40A includes a button 64 for arbitrarily setting a variable name in copy program 422. In response to selection of radio button 45, CPU 202 accepts operation of button 64.

In response to the operation of button 64, CPU 202 operating as extraction unit 22 extracts variable name 460 from target program 420. CPU 202 may further extract, from target program 420, at least one of variable comment 470 for each variable and a line comment for each unit program 440 constituting target program 420. Then, CPU 202 generates list 25 of variable name 460, variable comment 470, and the line comment that have been extracted, and displays a window 65 including the generated list 25 on display 214. CPU 202 generates and displays list 25 by a specified number of times of copying.

Operation unit 203 accepts an input of an editing instruction to list 25 in window 65. CPU 202 operating as editing unit 28 edits list 25 according to an input to operation unit 203, and creates edited list 26 (see Fig. 1). CPU 202 generates internal data indicating edited list 26 in response to the operation of a button 67 of window 65, and records the generated internal data in RAM 206.

CPU 202 operating as copy processing unit 24 rewrites the variable name, the variable comment, and the line comment in copy program 422 based on the internal data on RAM 206 in response to the operation of button 52 on setting screen 40A. Thereafter, CPU 202 sets (pastes) copy program 422 in control program 400.

In this modified example, since it is not necessary to confirm correspondence between setting file 300 and edited file 302, processing such as calculation of an error detection code is omitted. Specifically, steps S1 to S5 illustrated in Fig. 13 are omitted. Further, instead of steps S7 and S8, a step of generating list 25 of variable name 460, variable comment 470, and the line comment that have been extracted, and of displaying list 25 that has been generated on display 214 is performed.

In this modified example, steps S11 to S16 illustrated in Fig. 14 are omitted. In addition, instead of step S18, a step of reading a character string corresponding to the variable name, the variable comment, and the line comment from edited list 26 (see Fig. 1) indicated by the internal data recorded in RAM 206 is performed.

### <G. Action and effects>

As described above, support device 200 supports the development of control program 400 executed by PLC 100 that controls the control target. Support device 200 includes acceptance unit 21, extraction unit 22, generation unit 23, and copy processing unit 24. Acceptance unit 21 accepts selection of target program 420 to be copied from control program 400. Extraction unit 22 extracts a variable name from target program 420. Generation unit 23 generates list 25 of an extracted variable name (see Fig. 1). Copy processing unit 24 sets copy program 422 obtained by copying target program 420 in control program 400. Copy processing unit 24 rewrites the variable name in copy program 422 based on edited list 26 obtained by editing list 25.

According to the above configuration, the user can arbitrarily and easily change the variable name in copy program 422 by changing the variable name included in list 25 using various functions of the application. As a result, even when it is desired to arbitrarily change the variable name, it is possible to reduce time and effort of the user to carry out input work.

Generation unit 23 exports setting file 300 including list 25 and having the specified file format. Copy processing unit 24 rewrites the variable name in copy program 422 by importing edited file 302 including edited list 26 generated by editing setting file 300 using general-purpose application 232. General-purpose application 232 is an application capable of editing a file having a specified file format. As a result, the user can easily change the variable name in list 25 included in setting file 300 using various functions of general-purpose application 232.

Generation unit 23 causes setting file 300 to include an error detection code (for example, CRC) corresponding to target program 420. Copy processing unit 24 permits the import of edited file 302 when the error detection code (first error detection code) included in setting file 300 matches the error detection code (second error detection code) included in edited file 302. Copy processing unit 24 does not permit the import of edited file 302 when there is a difference between the first error detection code and the second error detection code.

According to the above configuration, when a file different from edited file 302 obtained by editing setting file 300 is erroneously specified, it is possible to prevent continuation of processing using this file.

Generation unit 23 may display list 25 on display 214 configured as a user interface. Support device 200 further includes editing unit 28 that edits list 25 to generate edited list 26 according to an input to operation unit 203 configured as a user interface. As a result, the user can edit list 25 without using general-purpose application 232.

Extraction unit 22 may further extract a variable comment for each variable from target program 420. Generation unit 23 causes the extracted variable comment to be included in list 25. Copy processing unit 24 rewrites the variable comment in copy program 422 based on edited list 26. As a result, the user can arbitrarily and easily change the variable comment in copy program 422 by changing the variable comment included in list 25.

Extraction unit 22 may further extract a line comment for each of unit programs 440 constituting target program 420 from target program 420. Generation unit 23 causes the extracted line comment to be included in list 25. Copy processing unit 24 rewrites the line comment for each unit program 440 in copy program 422 based on edited list 26. As a result, the user can arbitrarily and easily change the line comment in copy program 422 by changing the line comment included in list 25.

The file format is, for example, CSV format. As a result, the user can easily edit setting file 300 using general-purpose application 232 such as Microsoft Excel (registered trademark).

### <H. Appendix>

As described above, the present embodiment includes the following disclosure.

### (Configuration 1)

A support device (200) that supports development of a control program (400) executed in a control device (100) configured to control a control target, the support device (200) including:
an acceptance unit (21,202) configured to accept selection of a target program (420) to be copied from the control program (400);
an extraction unit (22,202) configured to extract a variable name from the target program (420);
a generation unit (23,202) configured to generate a list (25) of the extracted variable name; and
a copy processing unit (24,202) configured to set a copy program (422) in the control program (400), the copy program (422) being obtained by copying the target program (420), in which
the copy processing unit (24,202) rewrites a variable name in the copy program (422) based on an edited list (26) obtained by editing the list (25).

### (Configuration 2)

The support device (200) according to configuration 1, in which
the generation unit (23,202) exports a setting file (300) including the list (25) and having a specified file format, and
the copy processing unit (24,202) rewrites the variable name in the copy program (422) by importing an edited file (302) including the edited list (26) generated by editing the setting file (300) using an application (232) that is able to edit a file having the specified file format.

### (Configuration 3)

The support device (200) according to configuration 2, in which
the generation unit (23,202) causes a first error detection code corresponding to the target program (420) to be included in the setting file (300), and
the copy processing unit (24,202) permits the edited file to be imported when the first error detection code matches a second error detection code included in the edited file (302), and fails to permit the edited file (302) to be imported when there is a difference between the first error detection code and the second error detection code.

### (Configuration 4)

The support device (200) according to configuration 1, in which
the generation unit (23,202) displays the list (25) on a user interface (214), and
the support device (200) further includes an editing unit (28) configured to edit the list (25) according to an input to the user interface (203) to generate the edited list (26).

### (Configuration 5)

The support device (200) according to any one of configurations 1 to 4, in which
the extraction unit (22,202) further extracts a comment for each variable from the target program (420),
the generation unit (23,202) causes the extracted comment to be included in the list (25), and
the copy processing unit (24,202) rewrites a comment for each variable in the copy program (422) based on the edited list (26).

### (Configuration 6)

The support device (200) according to any one of configurations 1 to 4, in which
the extraction unit (22,202) further extracts a comment for each unit program (440) constituting the target program (420) from the target program (420),
the generation unit (23,202) causes the extracted comment to be included in the list (25), and
the copy processing unit (24,202) rewrites a comment for each unit program (440) in the copy program (422) based on the edited list (26).

### (Configuration 7)

The support device (200) according to configuration 2 or 3, in which the specified file format is a CSV format.

### (Configuration 8)

A support program (230) that is executed by a computer communicable with a control device (100) configured to control a control target, the support program supporting development of a control program (400) executed by the control device (100), the support program (230) causing the computer (200) to execute the steps including:
accepting selection of a target program (420) to be copied from the control program (400);
extracting a variable name from the target program (420);
generating a list (25) of the extracted variable name; and
setting a copy program (422) in the control program (400), the copy program being obtained by copying the target program (420), in which
the setting includes rewriting a variable name in the copy program (422) based on an edited list (26) obtained by editing the list (25).

### (Configuration 9)

A support method in a support device (200) that supports development of a control program (400) executed in a control device configured to control a control target, the support method including:
accepting selection of a target program (420) to be copied from the control program (400);
extracting a variable name from the target program (420);
generating a list (25) of the extracted variable name; and
setting a copy program (422) in the control program (400), the copy program being obtained by copying the target program (420), in which
the setting includes rewriting a variable name in the copy program (422) based on an edited list (26) obtained by editing the list (25).

Although the present invention has been described and illustrated in detail, it is clearly understood that the same is by way of illustration and example only and is not to be taken by way of limitation. The scope of the present invention is defined by the claims, and it is intended that meanings equivalent to the claims and all modifications within the scope are included.

### REFERENCE SIGNS LIST

1: control system, 10: CPU unit, 11: system bus, 12: power supply unit, 14, 16: I/O unit, 20: holding unit, 21: acceptance unit, 22: extraction unit, 23: generation unit, 24: copy processing unit, 25: list, 26: edited list, 28: application execution unit, 30: display screen, 31: frame line, 40: setting screen, 41, 48, 56, 57, 58, 61, 62: input field, 43 to 45: radio button, 46: variable list, 47: checkbox, 49, 50, 52, 53, 59, 63, 64, 67: button, 51: display field, 55, 60: dialog box, 65: window, 100: PLC, 102: processor, 104: chip set, 106: main memory, 108: flash memory, 110: system program, 116, 218: USB interface, 118: memory card interface, 120: memory card, 122: internal bus controller, 124: field bus controller, 200: support device, 201: storage unit, 202: CPU, 203: operation unit, 206: RAM, 210: keyboard, 211: mouse, 214: display, 216: optical recording medium reading device, 220: bus, 230: support program, 232: general-purpose application, 250: recording medium, 300: setting file, 302: edited file, 310, 312: file name, 320, 322: file version, 330, 332: error detection code, 400: control program, 420: target program, 422: copy program, 440: unit program, 450: line number, 460: variable name, 470: variable comment

## Claims

1. A support device that supports development of a control program executed in a control device configured to control a control target, the support device comprising:
an acceptance unit configured to accept selection of a target program to be copied from the control program;
an extraction unit configured to extract a variable name from the target program;
a generation unit configured to generate a list of the extracted variable name; and
a copy processing unit configured to set a copy program in the control program, the copy program being obtained by copying the target program, wherein
the copy processing unit rewrites a variable name in the copy program based on an edited list obtained by editing the list.

2. The support device according to claim 1, wherein
the generation unit exports a setting file including the list and having a specified file format, and
the copy processing unit rewrites the variable name in the copy program by importing an edited file including the edited list generated by editing the setting file using an application that is able to edit a file having the specified file format.

3. The support device according to claim 2, wherein
the generation unit causes a first error detection code corresponding to the target program to be included in the setting file, and
the copy processing unit permits the edited file to be imported when the first error detection code matches a second error detection code included in the edited file, and fails to permit the edited file to be imported when there is a difference between the first error detection code and the second error detection code.

4. The support device according to claim 1, wherein
the generation unit displays the list on a user interface, and
the support device further includes an editing unit configured to edit the list according to an input to the user interface to generate the edited list.

5. The support device according to any one of claims 1 to 4, wherein
the extraction unit further extracts a comment for each variable from the target program,
the generation unit causes the extracted comment to be included in the list, and
the copy processing unit rewrites a comment for each variable in the copy program based on the edited list.

6. The support device according to any one of claims 1 to 4, wherein
the extraction unit further extracts a comment for each unit program constituting the target program from the target program,
the generation unit causes the extracted comment to be included in the list, and
the copy processing unit rewrites a comment for each unit program in the copy program based on the edited list.

7. The support device according to claim 2 or 3, wherein the specified file format is a CSV format.

8. A support program that is executed by a computer communicable with a control device configured to control a control target, the support program supporting development of a control program executed by the control device, the support program causing the computer to execute the steps comprising:
accepting selection of a target program to be copied from the control program;
extracting a variable name from the target program;
generating a list of the extracted variable name; and
setting a copy program in the control program, the copy program being obtained by copying the target program, wherein
the setting includes rewriting a variable name in the copy program based on an edited list obtained by editing the list.

9. A support method in a support device that supports development of a control program executed in a control device configured to control a control target, the support method comprising:
accepting selection of a target program to be copied from the control program;
extracting a variable name from the target program;
generating a list of the extracted variable name; and
setting a copy program in the control program, the copy program being obtained by copying the target program, wherein
the setting includes rewriting a variable name in the copy program based on an edited list obtained by editing the list.
